# FASCICULE DE BREVET EUROPEEN

(11) **EP 3 683 149 B1**
(45) Date de publication et mention de la délivrance du brevet: **26.05.2021**
(21) Numéro de dépôt: 20151027.8
(22) Date de dépôt: 09.01.2020
(51) Int. Cl.: B64D 27/26

(54) **PROCÉDÉ D'ASSEMBLAGE D'UN MÂT D'AÉRONEF**
ZUSAMMENBAUVERFAHREN EINES LUFTFAHRZEUGMASTS
METHOD FOR MOUNTING A MAST OF AN AIRCRAFT

(30) Priorité: 21.01.2019 FR 1900502
(43) Date de publication de la demande: 22.07.2020
(73) Titulaire: AIRBUS OPERATIONS (S.A.S.), 31060 Toulouse (FR); Airbus Operations Limited, Bristol BS34 7PA (GB)
(72) Inventeur: THERON, Thierry, 31060 Toulouse Cedex 9 (FR); WHIFFEN, Robert, Bristol, BS34 7PA (GB); BENABEN, Audrey, 31060 Toulouse Cedex 9 (FR); DEDIEU, Joel, 31060 Toulouse Cedex 9 (FR); DEFORET, Thomas, 31060 Toulouse Cedex 9 (FR); MARTINEL, François, 31060 Toulouse Cedex 9 (FR); MOULIS, Julien, 31060 Toulouse Cedex 9 (FR)
(74) Mandataire: Sarraméa, Claude

(56) Documents cités:
- FR-A1- 2 931 133
- FR-A1- 3 059 648
- US-A1- 2012 080 554

## Description

La présente demande se rapporte à un procédé d'assemblage d'un mât d'aéronef.

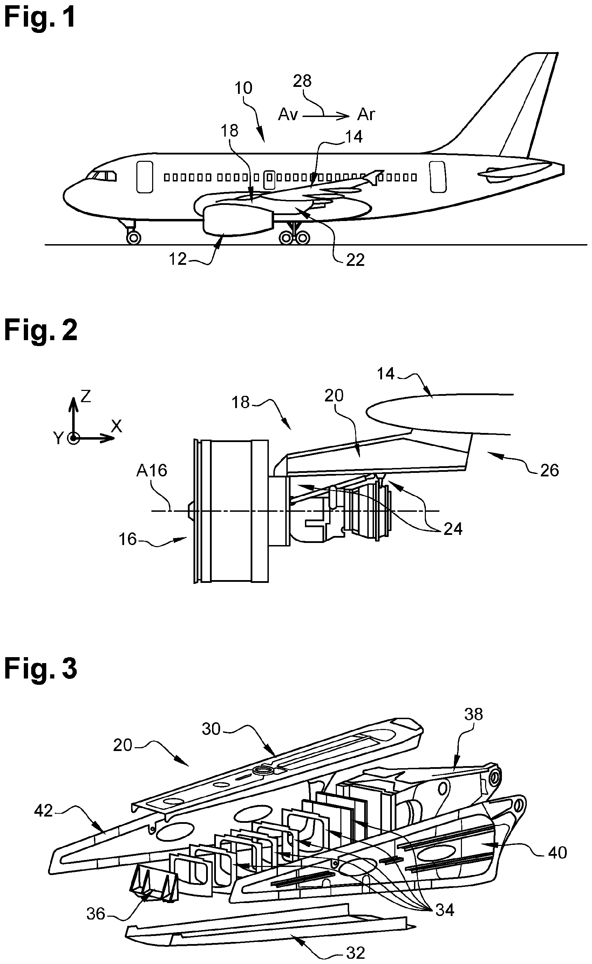

Selon une configuration visible sur les figures 1 et 2, un aéronef 10 comprend plusieurs ensembles propulseurs 12 qui sont positionnés sous la voilure 14 de l'aéronef 10.

Un ensemble propulseur 12 comprend un moteur 16, une nacelle (non représentée sur la figure 2) positionnée autour du moteur 16 et un mât 18 qui assure la liaison entre le moteur 16 et la voilure 14. Le mât 18 comprend une structure primaire 20 rigide qui assure entre autres la transmission des efforts entre le moteur 16 et le reste de l'aéronef 10, une structure secondaire 22 qui enveloppe la structure primaire 20 et qui limite la traînée du mât 18 ainsi que des systèmes positionnés à l'intérieur et à l'extérieur de la structure primaire 20. Selon une configuration, la structure primaire 20 est reliée au moteur 16 par une attache-moteur 24 et à la voilure 14 par une attache-voilure 26.

Pour la présente demande, une direction longitudinale X est une direction parallèle à l'axe moteur A16. Une direction transversale horizontale Y est une direction perpendiculaire à l'axe moteur A16 et horizontale. Une direction transversale verticale Z est une direction perpendiculaire à l'axe moteur A16 et verticale. Un plan longitudinal vertical est un plan parallèle aux directions longitudinale X et transversale verticale Z.

Les termes « avant » ou « Av » et « arrière » ou « Ar » se réfèrent à une direction d'avance de l'aéronef 10 suite à la poussée exercée par les ensembles propulseurs 12, cette direction étant représentée par la flèche 28 sur la figure 1.
Comme illustré sur la figure 3, la structure primaire 20 comprend :
- un longeron supérieur 30,
- un longeron inférieur 32,
- des cadres transversaux 34 qui relient les longerons supérieur et inférieur 30, 32, qui sont disposés dans des plans transversaux et qui ont chacun un contour approximativement carré ou rectangulaire,
- une paroi d'extrémité avant 36 qui relie une extrémité avant du longeron supérieur 30 et une extrémité avant du longeron inférieur 32,
- une partie d'extrémité arrière 38 qui relie une extrémité arrière du longeron supérieur 30 et une extrémité arrière du longeron inférieur 32,
- deux panneaux latéraux 40, 42 disposés de part et d'autre des cadres transversaux 34.

Selon un mode d'assemblage, les différents éléments de la structure primaire (les longerons supérieur et inférieur 30, 32, les cadres transversaux 34, la paroi d'extrémité avant 36, la partie d'extrémité arrière 38 et les panneaux latéraux 40, 42) sont assemblés de manière à obtenir un caisson creux fermé sur ses faces supérieure, inférieure, latérales. Après cette étape d'assemblage, il ne subsiste que des ouvertures de taille réduite, au niveau des longerons supérieur et inférieur 30, 32 ainsi qu'au niveau des panneaux latéraux 40, 42, pour accéder à l'intérieur de la structure primaire 20.

En suivant, les systèmes sont positionnés à l'intérieur et à l'extérieur de la structure primaire 20 puis la structure secondaire 22 est mise en place.

Selon ce mode opératoire, l'accessibilité pour mettre en place les systèmes à l'intérieur de la structure primaire déjà assemblée est limitée, ce qui peut parfois rendre leur installation longue et complexe pour les opérateurs.

Le document FR2.931.133 A1 décrit un mât qui comprend une structure primaire 26, 28, 30, une structure secondaire 44 ainsi que des systèmes externes 50, 52 positionnés entre la structure primaire 26, 28, 30 et la structure secondaire 44. Ce document ne décrit aucun système interne à la structure primaire et aucune étape de mise en place d'un tel système interne.

Le document FR3.059.648 A1 mentionne de la ligne 30 page 11 à la ligne 2 page 12 des étapes de finalisation d'un mât, après la réalisation de la structure primaire, consistant à ajouter une structure secondaire sous laquelle sont logés des câblages, des conduits et autres dispositifs. Ce document décrit des systèmes externes à la structure primaire, mais il ne décrit aucun système interne à la structure primaire et aucune étape de mise en place d'un tel système interne.

Le document US 2012/080554 A1 décrit à la figure 2, un conduit 182 qui chemine entre la structure primaire et la structure secondaire d'un mât. Ce document ne décrit aucun système interne à la structure primaire et aucune étape de mise en place du système interne.

### EXPOSE DE L'INVENTION :

La présente invention vise à remédier à tout ou partie des inconvénients de l'art antérieur.

A cet effet, l'invention a pour objet un procédé d'assemblage d'un mât d'aéronef comprenant une structure primaire ainsi qu'au moins un système interne au moins partiellement positionné à l'intérieur de la structure primaire, cette dernière comportant des longerons supérieur et inférieur, des cadres transversaux reliant les longerons supérieur et inférieur ainsi que des premier et deuxième panneaux latéraux disposés de part et d'autre des cadres transversaux, le procédé d'assemblage comprenant,
dans l'ordre chronologique, les étapes :
- d'assemblage de la structure primaire, à l'exception d'au moins un des premier et deuxième panneaux latéraux, de manière à obtenir une structure primaire dont au moins une face latérale est dégagée,
- de mise en place du système interne à l'intérieur de la structure primaire à partir de la face latérale dégagée de la structure primaire, et
- de fixation d'un des premier ou deuxième panneaux latéraux pour obturer chaque face latérale initialement dégagée.

Selon l'invention, les systèmes internes sont installés plus facilement, avec une meilleure visibilité pour les opérateurs, ce qui permet de réduire la durée de mise en place.

Selon une autre caractéristique, seul l'un des premier ou deuxième panneaux latéraux n'est pas assemblé à l'issue de l'étape d'assemblage de la structure primaire.

### DESCRIPTION DETAILLEE :

D'autres caractéristiques et avantages ressortiront de la description de l'invention qui va suivre, description donnée à titre d'exemple uniquement, en regard des dessins annexés parmi lesquels :
La figure 1 est une vue latérale d'un aéronef,
La figure 2 est une vue latérale d'une structure primaire d'un mât reliant un moteur à une voilure qui illustre un mode de réalisation,
La figure 3 est une vue en perspective et en éclaté d'une structure primaire d'un mât,
La figure 4 est une vue latérale d'une structure primaire d'un mât d'aéronef partiellement assemblée, préalablement à la mise en place de systèmes internes positionnés à l'intérieur de la structure primaire, qui illustre un mode de réalisation de l'invention,
La figure 5 est une vue latérale de la structure primaire visible sur la figure 4, dans laquelle sont positionnés des systèmes internes, qui illustre un mode de réalisation de l'invention, et
La figure 6 est une vue latérale de la structure primaire visible sur la figure 4 complètement assemblée.

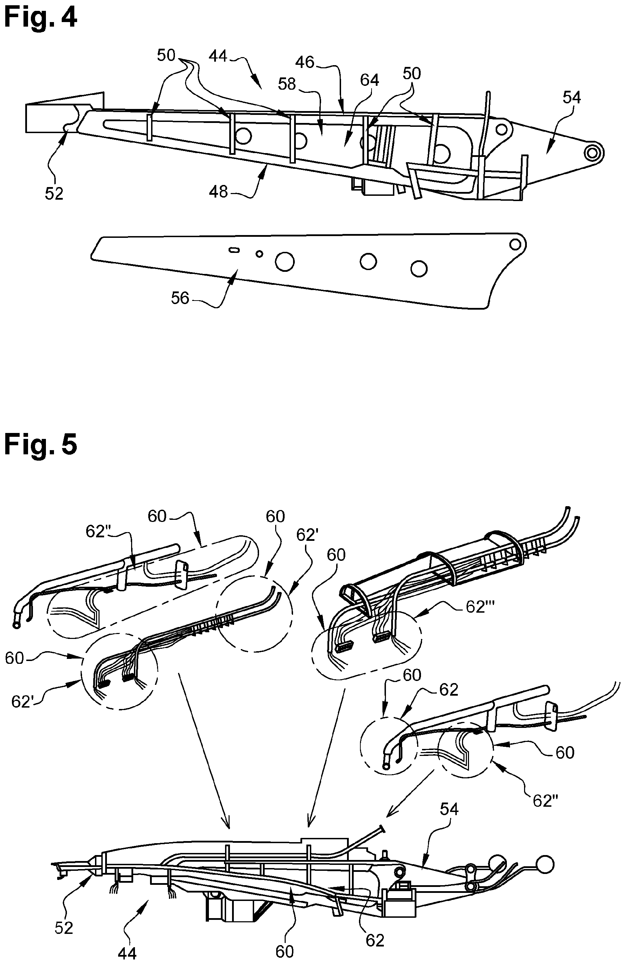

Sur les figures 4 à 6, on a représenté une structure primaire 44 d'un mât d'aéronef qui comprend :
- un longeron supérieur 46,
- un longeron inférieur 48,
- des cadres transversaux 50 qui relient les longerons supérieur et inférieur 46, 48, qui sont disposés dans des plans transversaux et qui ont chacun un contour approximativement carré ou rectangulaire,
- une paroi d'extrémité avant 52 qui relie une extrémité avant du longeron supérieur 46 et une extrémité avant du longeron inférieur 48,
- une partie d'extrémité arrière 54 qui relie une extrémité arrière du longeron supérieur 46 et une extrémité arrière du longeron inférieur 48,
- deux panneaux latéraux 56, 58 disposés de part et d'autre des cadres transversaux 50.

Selon un mode de réalisation, la structure primaire 44 comprend des longerons supérieur et inférieur 46, 48, des cadres transversaux 50 reliant les longerons supérieur et inférieur 46, 48 ainsi que des premier et deuxième panneaux latéraux 56, 58 disposés de part et d'autre des cadres transversaux 50.

Le mât d'aéronef comprend également au moins un système interne 60 positionné au moins partiellement à l'intérieur de la structure primaire 44, au moins un système externe positionné à l'extérieur de la structure primaire 44 et une structure secondaire.

Comme illustré sur la figure 5, selon une configuration, le mât d'aéronef comprend plusieurs systèmes internes 60, comme par exemple des canalisations 62, des faisceaux de câbles 62', un système d'extinction de feu 62", un système de drainage 62'''.

Les éléments formant la structure primaire 44, les systèmes internes et externes ainsi que la structure secondaire ne sont pas plus décrits car ils sont connus de l'homme du métier.

Le procédé d'assemblage du mât d'aéronef comprend une première étape d'assemblage des éléments de la structure primaire 44 à l'exception d'au moins un des premier et deuxième panneaux latéraux 56, 58. Selon un mode opératoire, à l'issue de la première étape, seul le premier panneau latéral 56 n'est pas assemblé.

Suite à cette première étape, les longerons supérieur et inférieur 46, 48, les cadres transversaux 50, la paroi d'extrémité avant 52, la partie d'extrémité arrière 54 et le deuxième panneau latéral 58 sont reliés entre eux par tout moyen approprié, comme par soudage, par rivetage, par sertissage, par collage, par boulonnage ou autres.

Selon un mode opératoire, les différents éléments de la structure primaire 44 sont percés indépendamment les uns des autres, avant d'être assemblés. Ils sont reliés entre eux par boulonnage et/ou rivetage.

Cette première étape d'assemblage n'est pas plus décrite car les longerons supérieur et inférieur 46, 48, les cadres transversaux 50, la paroi d'extrémité avant 52, la partie d'extrémité arrière 54 et le deuxième panneau latéral 58 peuvent être reliés entre eux de la même manière que dans les procédés de l'art antérieur.

A l'issue de cette première étape, la structure primaire 44 forme un caisson dont au moins une face latérale 64, celle recouverte à la fin par le premier panneau latéral 56, est dégagée.

Le procédé d'assemblage du mât comprend une deuxième étape de mise en place d'au moins un système interne 60 à l'intérieur de la structure primaire 44 à partir de la face latérale 64 dégagée de la structure primaire 44, notamment en l'introduisant via la face latérale 64. Selon un mode opératoire, tous les systèmes internes 60 sont positionnés à l'intérieur de la structure primaire 44 avant le montage du premier panneau latéral 56.

Les systèmes internes 60 sont reliés entre eux et/ou à la structure primaire 44 et/ou à au moins un système externe et/ou à la structure secondaire. Ces liaisons ne sont pas plus décrites car elles sont identiques à celles de l'art antérieur.

Selon l'invention, le (ou les) système(s) interne(s) 60 est (ou sont) positionné(s) à l'intérieur de la structure primaire 44 avant que le dernier panneau latéral 56, 58 de la structure primaire 44 ne soit fixé. En l'absence d'un des panneaux latéraux 56, 58, les systèmes internes 60 sont installés plus facilement, avec une meilleure visibilité pour les opérateurs, ce qui permet de réduire la durée de mise en place.

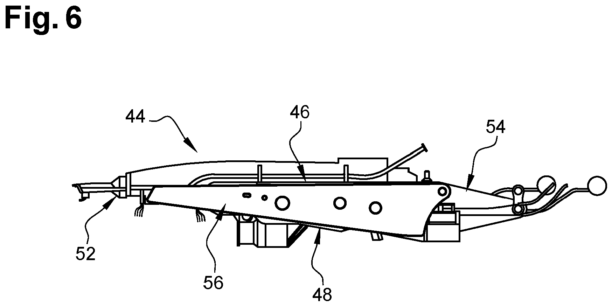

Après l'installation d'au moins un système interne 60, le procédé d'assemblage du mât comprend, pour chaque face latérale 64 initialement dégagée, une étape de fixation d'un des premier et deuxième panneaux latéraux 56, 58 au reste de la structure primaire 44, notamment aux longerons supérieur et inférieur 46, 48, aux cadres transversaux 50, à la paroi d'extrémité avant 52 et/ou à la partie d'extrémité arrière 54 de manière à obturer chaque face latérale 64 initialement dégagée et à ainsi obtenir une forme en caisson fermée, comme illustrée sur la figure 6.

Enfin, le procédé d'assemblage du mât comprend également au moins une étape de mise en place des systèmes externes et de la structure secondaire.

Selon un mode de réalisation, la structure secondaire comprend plusieurs parties. Au moins l'une d'elles peut être reliée à la structure primaire 44 avant l'étape de mise en place du ou des système(s) interne(s) 60 ou avant l'étape de fixation du premier panneau latéral 56.

A l'issue du procédé d'assemblage, la structure primaire 44 peut être identique à celle de l'art antérieur. Seul l'ordre des étapes du procédé d'assemblage est modifié.

## Revendications

1. Procédé d'assemblage d'un mât d'aéronef, ledit mât d'aéronef comprenant :
- une structure primaire (44), comportant des longerons supérieur et inférieur (46, 48), des cadres transversaux (50) reliant les longerons supérieur et inférieur (46, 48) ainsi que des premier et deuxième panneaux latéraux (56,58) disposés de part et d'autre des cadres transversaux (50),
- une structure secondaire (22) qui enveloppe la structure primaire,
- au moins un système interne (60) au moins partiellement positionné à l'intérieur de la structure primaire (44),
- ainsi qu'au moins un système externe positionné à l'extérieur de la structure primaire 44,
le procédé d'assemblage comprenant dans l'ordre chronologique les étapes :
- d'assemblage de la structure primaire (44) à l'exception d'au moins un des premier et deuxième panneaux latéraux (56, 58) de manière à obtenir une structure primaire (44) dont au moins une face latérale (64) est dégagée,
- de mise en place du système interne (60) à l'intérieur de la structure primaire (44) à partir de la face latérale (64) dégagée de la structure primaire (44), et
- de fixation d'un des premier ou deuxième panneaux latéraux (56, 58) pour obturer chaque face latérale (64) initialement dégagée.

2. Procédé d'assemblage d'un mât d'aéronef selon la revendication 1, **caractérisé en ce que** seul un des premier ou deuxième panneaux latéraux (56, 58) n'est pas assemblé à l'issue de l'étape d'assemblage de la structure primaire (44).

## Patentansprüche

1. Verfahren zur Montage eines Luftfahrzeugpylons, wobei der Luftfahrzeugpylon Folgendes umfasst:
- eine Primärstruktur (44), die einen oberen und einen unteren Rahmenträger (46, 48), Querrahmen (50), die den oberen und den unteren Rahmenträger (46, 48) verbinden, und eine erste und eine zweite Seitentafel (56, 58) aufweist, die beiderseits der Querrahmen (50) angeordnet sind,
- eine Sekundärstruktur (22), die die Primärstruktur umhüllt,
- mindestens ein inneres System (60), das mindestens teilweise im Innern der Primärstruktur (44) positioniert ist,
- sowie mindestens ein äußeres System, das außerhalb der Primärstruktur (44) positioniert ist,
wobei das Montageverfahren die folgenden Schritte in chronologischer Folge umfasst:
- Montage der Primärstruktur (44) außer mindestens einer der ersten oder der zweiten Seitentafel (56, 58), um eine Primärstruktur (44) zu erhalten, bei der mindestens eine Seitenfläche (64) freiliegt,
- Platzierung des inneren Systems (60) in das Innere der Primärstruktur (44) von der freiliegenden Seitenfläche (64) der Primärstruktur (44) her und
- Fixierung einer der ersten oder der zweiten Seitentafel (56, 58) zum Verschließen jeder anfangs freiliegenden Seitenfläche (64).

2. Verfahren zur Montage eines Luftfahrzeugpylons nach Anspruch 1, **dadurch gekennzeichnet, dass** nur eine der ersten oder der zweiten Seitentafel (56, 58) nicht nach Abschluss des Montageschritts der Primärstruktur (44) montiert wird.

## Claims

1. Method for assembling an aircraft pylon, said aircraft pylon comprising:
- a primary structure (44) comprising upper and lower longerons (46, 48), transverse frames (50) connecting the upper and lower longerons (46, 48), and a first and a second lateral panel (56, 58) arranged on either side of the transverse frames (50),
- a secondary structure (22) which encloses the primary structure,
- at least one internal system (60) that is at least partially positioned inside the primary structure (44),
- and at least one external system that is positioned outside the primary structure (44),
the assembly method comprising the following steps, in chronological order:
- assembling the primary structure (44) with the exception of at least one of the first and second lateral panels (56, 58) so as to obtain a primary structure (44) having at least one lateral face (64) left open,
- installing the internal system (60) inside the primary structure (44) from the open lateral face (64) of the primary structure (44), and
- securing the first and/or second lateral panel (56, 58) in order to close each lateral face (64) that was previously open.

2. Method for assembling an aircraft pylon according to Claim 1, **characterized in that**, at the end of the step of assembling the primary structure (44), only one of the first and second lateral panels (56, 58) is not assembled.
